# FASCICULE DE BREVET EUROPEEN

(11) **EP 1 481 756 B1**
(45) Date de publication et mention de la délivrance du brevet: **02.02.2011**
(21) Numéro de dépôt: 04102300.3
(22) Date de dépôt: 25.05.2004
(51) Int. Cl.: B23P 15/04

(54) **Procédé de fabrication d'une aube creuse pour turbomachine**
Verfahren zur Herstellung einer hohlen Turbinenschaufel
Method of fabricating a hollow turbine blade

(30) Priorité: 27.05.2003 FR 0350183
(43) Date de publication de la demande: 01.12.2004
(73) Titulaire: SNECMA, 75015 Paris (FR)
(72) Inventeur: Ferte, Jean-Pierre, 91100 Corbeil Essonnes (FR); Franchet, Jean-Michel, Patrick, Maurice, 75018 Paris (FR); Lhomme, Daniel, Gaston, 95550 Bessancourt (FR); Lorieux, Alain, 95110 Sannois (FR)
(74) Mandataire: Poulin, Gérard

(56) Documents cités:
- GB-A- 817 660
- US-A- 3 768 147
- US-A- 4 583 274
- US-A- 5 636 440
- US-B1- 6 331 217

## Description

### DOMAINE TECHNIQUE

La présente invention se rapporte de façon générale au domaine des procédés de fabrication d'aubes pour turbomachine, telles que des aubes creuses de soufflante, ou encore de tout autre type d'aubes de rotor ou de stator pour turbomachine.

### ETAT DE LA TECHNIQUE ANTERIEURE

Habituellement, une aube creuse de soufflante pour turbomachine comprend un pied d'épaisseur relativement importante servant à la fixation de cette aube dans un disque de rotor, ce pied étant prolongé radialement vers l'extérieur par une partie aérodynamique fine, appelée pale de l'aube.

De l'art antérieur, on connaît un procédé de fabrication d'une telle aube creuse, basé principalement sur l'utilisation de la technique de soudage par diffusion, associée à celle de formage superplastique.

En effet, dans ce procédé de l'art antérieur, deux ou trois pièces constitutives de l'aube sont d'abord définies, puis fabriquées séparément avant d'être superposées et assemblées entre elles à l'aide de la technique de soudage par diffusion, dans le but d'obtenir une préforme de l'aube désirée.

Par la suite, il est procédé à une mise au profil aérodynamique de la préforme préalablement fabriquée, puis à un gonflage par pression gazeuse et à un formage superplastique de cette préforme, afin d'aboutir à une aube présentant sensiblement sa forme finale.

Comme cela a été évoqué ci-dessus, la fabrication de la préforme d'aube requiert une étape de réalisation de deux pièces externes, et éventuellement celle d'une pièce centrale destinée à être interposée entre ces deux pièces externes, dans le but de remplir ultérieurement une fonction de raidisseur.

La fabrication des pièces externes s'effectue typiquement par usinage d'éléments d'approvisionnement disposant nécessairement de dimensions initiales relativement importantes, dans la mesure où chacune des deux pièces externes usinées doit présenter deux portions radialement opposées d'épaisseurs très différentes, ces deux portions constitutives de la pièce externe étant respectivement appelées la partie pied et la partie pale.

Ainsi, la fabrication des pièces externes destinées à constituer au moins partiellement la préforme d'aube, par exemple obtenues par laminage, génère des coûts de matière et des coûts d'usinage extrêmement élevés, de sorte que ce procédé de fabrication de l'aube creuse n'est pas totalement optimisé.

Pour faire face à cet inconvénient, comme décrit dans le document GB-A-2 306 353, il a alors été proposé de réaliser les deux pièces externes de la préforme d'aube en coupant un prisme rectangulaire dans le sens de la longueur et le long d'un plan incliné, afin que les deux surfaces obtenues lors de l'opération de coupe soient en mesure de constituer les faces des deux pièces externes destinées ultérieurement à former la surface d'extrados et la surface d'intrados de l'aube creuse.

D'autre part, il a également été proposé de réaliser les deux pièces externes de la préforme d'aube par forgeage, comme le décrit le document US-A-5 636 440. Cependant, cette technique de fabrication par forgeage est relativement coûteuse à mettre en oeuvre, toujours en raison de la nécessité d'obtenir des pièces disposant chacune d'une épaisseur non homogène.

### EXPOSÉ DE L'INVENTION

L'invention a donc pour but de proposer un procédé de fabrication d'une aube creuse pour turbomachine, remédiant au moins partiellement aux inconvénients mentionnés ci-dessus relatifs aux réalisations de l'art antérieur.

Plus précisément, le but de l'invention est de présenter un procédé de fabrication d'une aube creuse dont l'étape de réalisation des deux pièces externes de la préforme d'aube engendre des coûts de fabrication affaiblis de façon significative par rapport à ceux rencontrés dans l'art antérieur.

Pour ce faire, l'invention a donc pour objet un procédé de fabrication d'une aube creuse pour turbomachine comprenant un pied et une pale, le procédé comportant une étape de réalisation de deux pièces externes présentant chacune une partie pale et une partie pied et étant destinées à former au moins partiellement une préforme d'aube, le procédé comprenant en outre une étape d'assemblage par soudage par diffusion des deux pièces externes de manière à obtenir la préforme d'aube. Selon l'invention, l'étape de réalisation des deux pièces externes comprend, pour chacune de ces pièces externes, les opérations suivantes :
- la fabrication par forgeage, de préférence par laminage d'un élément primaire constituant au moins la partie pale de la pièce externe,
- la fabrication par forgeage, de préférence par filage, d'au moins un élément secondaire destiné à former au moins partiellement la partie pied de la pièce externe, et
- l'assemblage de chaque élément secondaire sur l'élément primaire afin d'obtenir la pièce externe.

Avantageusement, dans le procédé de fabrication selon l'invention, la réalisation de la préforme d'aube n'intègre plus la fabrication largement onéreuse de deux pièces externes chacune d'un seul tenant et destinée à comprendre deux portions d'épaisseurs considérablement différentes servant respectivement à définir la partie pied et la partie pale de cette pièce externe.

Au contraire, chaque pièce externe est réalisée à l'aide d'un élément primaire constituant pas ou plus intégralement la partie pied de la pièce, ainsi que d'au moins un élément secondaire formant uniquement et au moins partiellement la partie pied de cette même pièce externe. De cette façon, les éléments primaires des pièces externes de la préforme d'aube peuvent alors être judicieusement définis de sorte que chacun dispose d'une épaisseur relativement homogène, engendrant ainsi naturellement une réduction significative des coûts de fabrication, notamment en ce qui concerne les coûts de matière et les coûts d'usinage.

D'autre part, chaque élément secondaire n'étant pas destiné à entrer dans la constitution de la partie pale de la pièce externe associée mais uniquement à former au moins partiellement la partie pied de cette même pièce, il est évident que les coûts de fabrication peuvent également être minimisés, notamment en raison de leur longueur radiale nécessairement peu importante.

En d'autres termes, le procédé selon l'invention prévoit une réalisation de chaque pièce externe de la préforme d'aube à l'aide d'une pluralité d'éléments dont un ou plusieurs ne s'étendent pas sur toute la longueur radiale de cette pièce externe, ce qui permet alors facilement de pallier les inconvénients directement liés à l'importante variation d'épaisseur des pièces externes dans leur direction radiale.

De préférence, l'opération d'assemblage de chaque élément secondaire sur l'élément primaire est mise en oeuvre à l'aide d'une technique prise parmi le groupe constitué du soudage par friction linéaire, et du soudage par « friction stir welding », ces techniques étant préférées en ce sens qu'elles sont relativement faciles à mettre en oeuvre, fiables, peu coûteuses, et métallurgiquement peu destructrices.

Préférentiellement, l'étape d'assemblage par soudage par diffusion des deux pièces externes de manière à obtenir la préforme d'aube est suivie des étapes suivantes :
- mise au profil aérodynamique de la préforme, et
- gonflage par pression gazeuse et formage superplastique de la préforme mise au profil aérodynamique.

On peut prévoir que chaque élément secondaire destiné à former au moins partiellement la partie pied de chacune des deux pièces externes est réalisé par filage. Avantageusement, cette technique peu onéreuse à mettre en oeuvre consiste, à partir d'une billette de matière et au travers d'une filière appropriée, à réaliser un profil de l'élément secondaire disposant de la géométrie désirée.

Dans un premier mode de réalisation préféré du procédé de fabrication selon l'invention, pour chacune des deux pièces externes, ce procédé est mis en oeuvre de telle sorte que l'élément primaire est fabriqué de manière à former uniquement la partie pale de la pièce externe, et de telle sorte qu'un unique élément secondaire est fabriqué de façon à former intégralement la partie pied de cette préforme.

Dans un second et un troisième modes de réalisation préférés du procédé de fabrication selon l'invention, pour chacune des deux pièces externes, ce procédé est mis en oeuvre de telle sorte que l'élément primaire est fabriqué de manière à former la partie pale de la pièce externe ainsi qu'une portion centrale de la partie pied de cette pièce externe, et de telle sorte qu'au moins un élément secondaire est fabriqué de façon à former une portion de la partie pied de la pièce externe, lorsqu'il est assemblé sur l'élément primaire.

A ce titre, on peut prévoir que pour chacune des deux pièces externes de la préforme d'aube, l'élément primaire est fabriqué de manière à présenter une surface externe, et que les éléments secondaires sont assemblés sur cette même surface externe.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'une aube creuse classique pour turbomachine,
- la figure 2 représente une vue schématique en perspective d'une pièce externe d'une préforme d'aube, obtenue lors de la mise en oeuvre de l'étape de réalisation des deux pièces externes du procédé de fabrication selon la présente invention,
- les figures 3a à 3e illustrent schématiquement des étapes d'un premier mode de réalisation préféré du procédé de fabrication selon la présente invention, et
- les figures 4 et 5 représentent une pièce externe de préforme d'aube, obtenue lors de la mise en oeuvre de l'étape de réalisation des deux pièces externes du procédé de fabrication, respectivement selon un second mode et un troisième mode de réalisation préférés de la présente invention.

### EXPOSÉ DÉTAILLÉ DE MODES DE RÉALISATION PRÉFÉRÉS

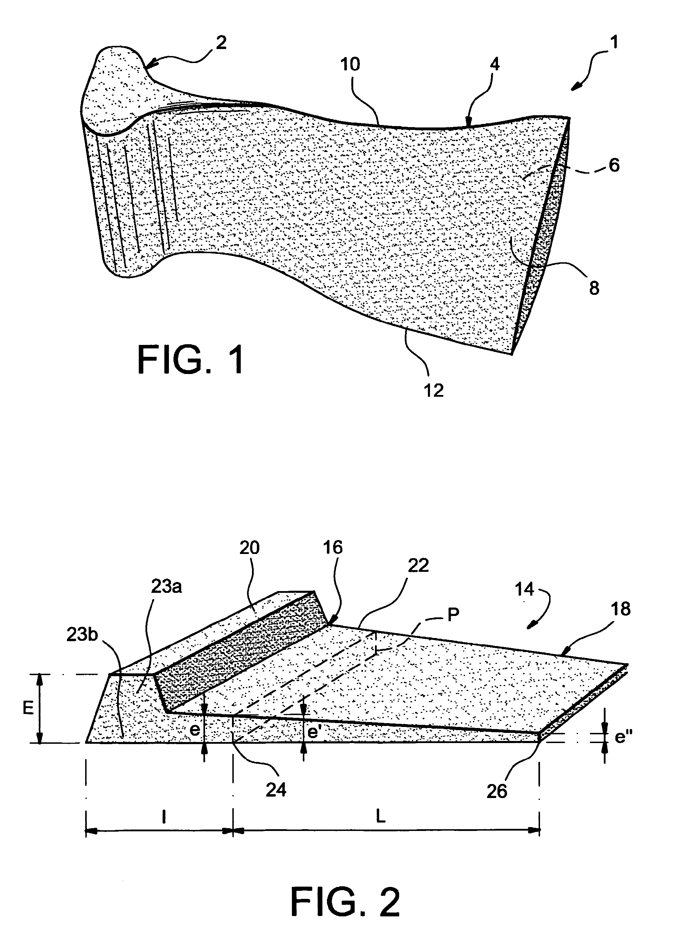

En référence à la figure 1, on peut apercevoir une aube creuse classique 1 pour turbomachine (non représentée), par exemple réalisée en titane ou dans l'un de ses alliages.

Cette aube creuse 1, du type aube de rotor de soufflante à grande corde, comporte un pied 2 prolongé par une pale 4 dans une direction radiale.

La pale 4, destinée à être placée dans la veine de circulation d'un flux d'air de la turbomachine, est munie de deux surfaces extérieures 6 et 8, respectivement appelées surface d'extrados 6 et surface d'intrados 8, raccordées par un bord d'attaque 10 et un bord de fuite 12.

La figure 2 représente une pièce externe 14 d'une préforme d'aube, telle que celle destinée à être obtenue suite à une étape de réalisation de deux pièces externes 14, lors de la mise en oeuvre du procédé de fabrication selon la présente invention.

Cette pièce externe 14 comporte une partie pied 16 d'épaisseur importante et variable, qui est prolongée dans une direction radiale par une partie pale 18. Comme on peut le voir sur cette figure 2, la partie pied 16 dispose d'une portion radiale interne 20 d'une épaisseur moyenne E élevée, cette portion 20 étant prolongée radialement extérieurement par une portion radiale externe 22 d'une épaisseur moyenne e plus faible que l'épaisseur moyenne E. Il est noté à titre indicatif que la portion radiale interne 20 est ultérieurement destinée à assurer la fixation de l'aube dans un disque de rotor de la turbomachine, notamment grâce à la partie de projection 23a solidaire d'une partie centrale 23b agencée dans le prolongement de la portion radiale externe 22 de la partie pied 16.

En outre, la partie pale 18 de la pièce externe 14 dispose d'une extrémité radialement interne 24 d'une épaisseur e' sensiblement égale à l'épaisseur moyenne e, et d'une extrémité radialement externe 26 d'une épaisseur e" plus faible que l'épaisseur e'. Cependant, la partie pale 18 de la pièce 14 est d'épaisseur sensiblement homogène.

D'autre part, il est indiqué que l'extrémité radialement interne 24 établit la jonction entre la partie pale 18 et la portion radiale externe 22 de la partie pied 16 de la pièce externe 14, comme le montre schématiquement le plan fictif de jonction P représenté sur la figure 2.

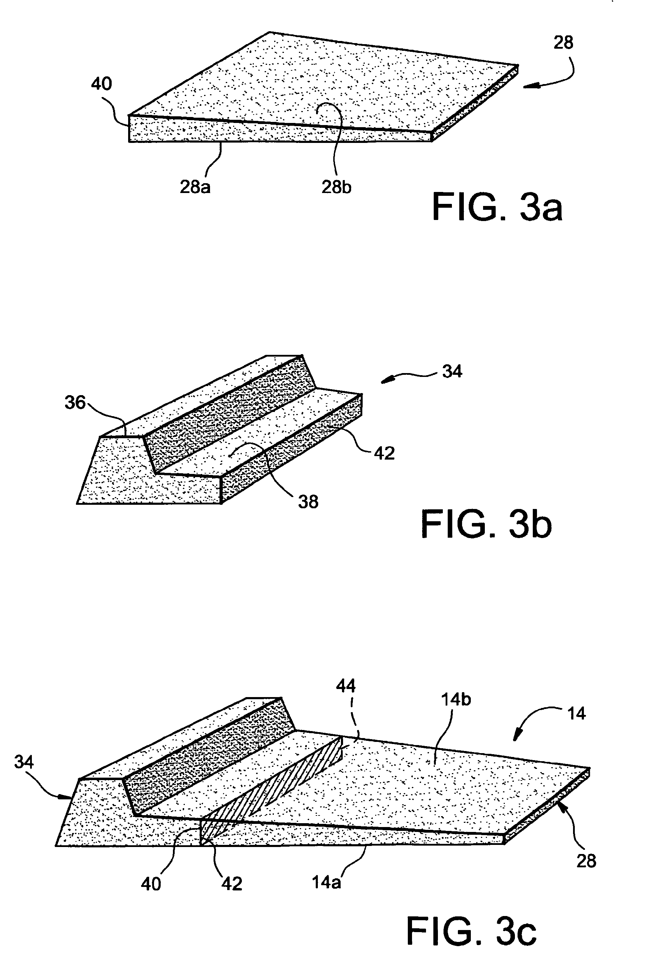

Dans un premier mode de réalisation préféré du procédé de fabrication selon la présente invention, une étape de réalisation des deux pièces externes 14 de la préforme d'aube est effectuée de la manière décrite ci-dessus, en faisant référence aux figures 3a à 3c. A ce titre, il est noté que les deux pièces externes 14 étant habituellement réalisées de la même manière, seule la fabrication de l'une de ces deux pièces 14 va donc être présentée.

Ainsi, pour fabriquer une pièce externe 14 de préforme d'aube, il est tout d'abord procédé à la fabrication d'un élément primaire 28, présentant une surface interne 28a ainsi qu'une surface externe 28b. Dans ce premier mode de réalisation préféré de la présente invention, l'élément primaire 28 est fabriqué de telle sorte qu'il forme uniquement la partie pale 18 de cette pièce externe 14. Par conséquent, l'épaisseur de cet élément primaire 28 est sensiblement homogène, et la technique de réalisation de ce dernier par forgeage, de préférence par laminage, est donc particulièrement adaptée, et tout à fait optimisée en termes de coûts de matière et de coûts d'usinage. Ceci s'explique par le fait que l'élément d'approvisionnement nécessaire à sa fabrication peut facilement disposer de dimensions proches des dimensions finales que doit présenter ce même élément 28.

Parallèlement à la fabrication de l'élément primaire 28 formant uniquement et intégralement la partie pale 18 de la pièce externe 14, il est également réalisé un élément secondaire unique 34, destiné dans ce premier mode de réalisation préféré à former intégralement la partie pied 16 de cette même pièce 14. Ainsi, il est naturellement précisé que l'élément primaire 28 et l'élément secondaire 34 disposent chacun d'une géométrie respectivement sensiblement identique à la géométrie de la partie pale 18 et de la partie pied 16 de la pièce externe 14 représentée sur la figure 2.

Comme cela est montré sur la figure 3b, l'élément secondaire 34 comporte donc une partie 36 d'épaisseur importante et similaire à la portion radiale interne 20 représentée sur la figure 2, ainsi qu'une partie 38 d'épaisseur plus faible similaire à la portion radiale externe 22 représentée sur cette même figure 2. L'élément 34 peut par conséquent facilement être fabriqué par filage en toute autre technique de forgeage, cette technique préférée de filage/extrusion éprouvée à faible coût consistant, à partir d'une billette de matière et au travers d'une filière appropriée, à réaliser un profil de l'élément secondaire 34 disposant de la géométrie désirée. De cette façon, avec une telle technique, il est possible de fabriquer des éléments secondaires 34 les uns à la suite des autres, par simple tranchage de pièces de grande longueur.

Lorsque l'élément primaire 28 et l'élément secondaire 34 ont été simultanément réalisés, de préférence dans un alliage de titane, il est ensuite procédé à leur assemblage de manière à obtenir sensiblement la géométrie de la pièce externe 14, comme l'illustre la figure 3c.

Cet assemblage peut alors s'effectuer par soudage, en mettant en contact une surface radiale interne 40 de l'élément primaire 28 avec une surface radiale externe 42 de l'élément secondaire 34. Ces surfaces 40 et 42 sont sensiblement planes et définissent conjointement une zone plane de contact 44, disposée sensiblement à un emplacement identique à celui du plan fictif de jonction P représenté sur la figure 2, par rapport aux parties de pied 16 et de pale 18 de la pièce externe 14.

A titre d'exemples indicatifs, l'opération d'assemblage de l'élément secondaire 34 sur l'élément primaire 28 est préférentiellement réalisée par soudage par friction linéaire, ou par soudage par « friction stir welding ». Ces techniques de soudage connues permettent avantageusement à la zone soudée de conserver des caractéristiques métallurgiques compatibles avec la technique de soudage par diffusion et celle de gonflage superplastique, et assurent des propriétés mécaniques conformes aux spécifications de la pièce externe finie.

Bien entendu, cette opération de soudage peut être suivie d'une opération d'usinage de reconditionnement géométrique de la zone soudée, dans le but d'obtenir une pièce externe 14 dont une surface interne 14a et une surface externe 14b disposent de la géométrie escomptée.

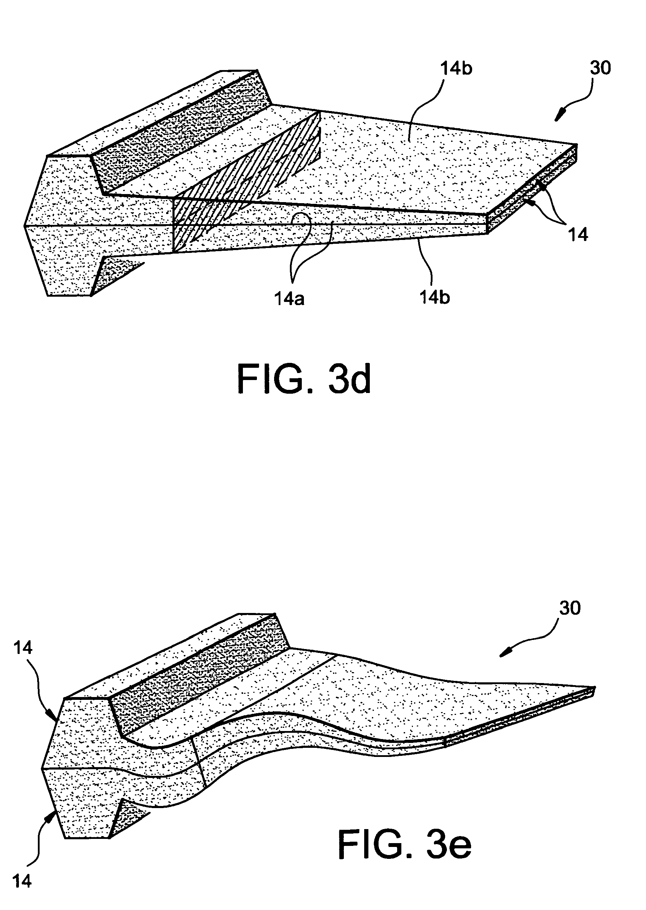

Lorsque les deux pièces externes 14 ont été fabriquées de la manière qui vient d'être exposée, par exemple simultanément et de façon à être sensiblement identiques, il est ensuite procédé à une étape d'assemblage par soudage par diffusion de ces deux pièces 14 de manière à obtenir la préforme d'aube désirée 30, comme l'illustre schématiquement la figure 3d.

A ce titre, il est indiqué que la préforme 30 peut être réalisée classiquement à l'aide de deux pièces externes 14 identiques aux faces internes 14a rainurées, ou encore à l'aide de trois pièces dont les deux pièces externes identiques 14 disposent de surfaces internes 14a sensiblement lisses en contact avec une troisième pièce intermédiaire (non représentée), destinée à constituer ultérieurement un raidisseur.

Ainsi, dans le cas où la préforme 30 est uniquement constituée des deux pièces externes identiques 14, une fois que celles-ci sont fabriquées comme décrit ci-dessus, elles sont alors soudées entre-elles par diffusion, d'une manière analogue à celle rencontrée dans l'art antérieur pour effectuer l'assemblage des diverses pièces constitutives de la préforme. A cet égard et de façon connue, il est noté que l'opération de soudage par diffusion est précédée d'une opération de dépôt de barrières anti-diffusion (non représentées) suivant un motif déterminé, les barrières étant agencées au niveau des surfaces internes en contact 14a des pièces externes 14.

En outre, dans le cas où la préforme 30 est du type comportant trois pièces superposées dont une pièce intermédiaire, l'étape d'assemblage par soudage par diffusion de deux pièces 14 s'effectue alors d'une façon analogue et classique, en interposant cette pièce intermédiaire entre les deux pièces externes 14 afin que celles-ci soient chacune fixées par soudage par diffusion à la pièce intermédiaire.

Suite à l'étape de réalisation de la préforme d'aube 30 qui vient d'être décrite, il est ensuite procédé à des étapes classiques visant tout d'abord à mettre au profil aérodynamique la préforme 30, de manière à ce qu'elle dispose d'une forme sensiblement vrillée comme l'illustre la figure 3e. Ensuite, toujours de façon connue, une étape de gonflage par pression gazeuse et de formage superplastique permet d'obtenir l'aube 1 telle que celle représentée sur la figure 1, cette étape étant habituellement suivie par un usinage final destiné à donner à l'aube 1 rigoureusement le profil aérodynamique souhaité.

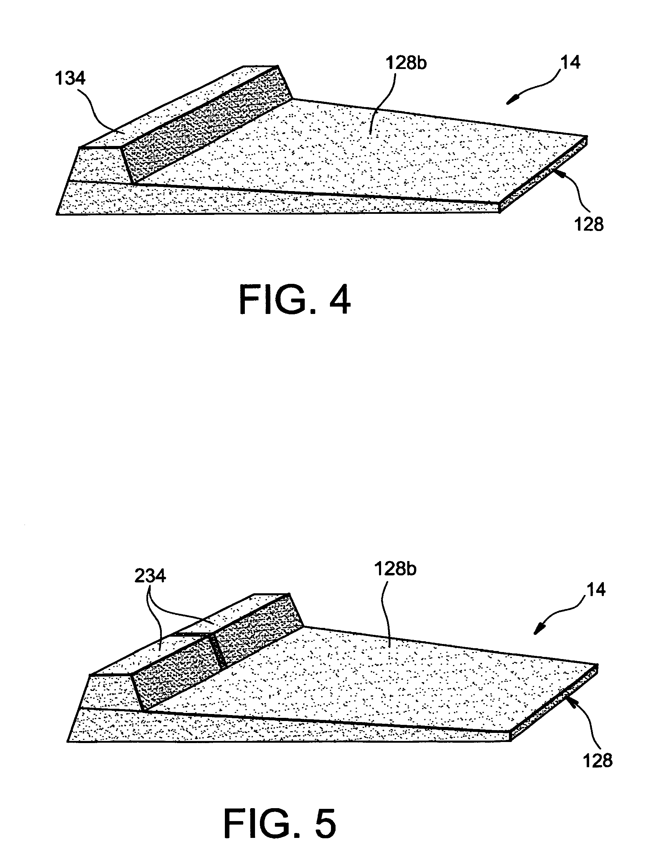

La figure 4 représente une pièce externe 14 obtenue suite à la mise en oeuvre de l'étape de réalisation des deux pièces externes 14, lors de la mise en oeuvre du procédé de fabrication selon un second mode de réalisation préféré de la présente invention.

Dans ce second mode de réalisation préféré, seule cette étape de réalisation des deux pièces externes 14 diffère légèrement par rapport à celle mise en oeuvre dans le procédé de fabrication selon le premier mode de réalisation préféré décrit précédemment, les autres étapes étant sensiblement identiques.

En effet, un élément primaire 128 est réalisé de façon similaire à celle rencontrée pour la réalisation de l'élément primaire 28, à la différence que l'élément primaire 128 est destiné à former la partie pale 18 de la pièce externe 14, ainsi qu'une portion centrale de la partie pied 16 de cette même pièce 14. A ce titre, il est noté que la partie centrale de la partie pied 16, non référencée sur la figure 2, doit être comprise comme étant sensiblement constituée de toute la portion radiale externe 22 ainsi que de la partie centrale 23b de la portion radiale interne 20.

De cette façon, comme on peut le voir sur la figure 4, l'élément primaire 128 s'étend donc sur toute la longueur radiale de la pièce 14, tout en conservant une épaisseur homogène. Par conséquent, ici encore, la technique d'obtention des pièces 128 par laminage est donc particulièrement adaptée, et tout à fait optimisée en termes de coûts de matière et de coûts d'usinage, dans la mesure où les éléments d'approvisionnement nécessaires à la fabrication de ces pièces externes 128 peuvent facilement disposer de dimensions proches des dimensions finales que doivent présenter ces mêmes pièces 128.

D'autre part, dans ce second mode de réalisation préféré de la présente invention, un unique élément secondaire 134 est fabriqué de façon à ce qu'il forme une portion de la partie pied 16 de la pièce 14, lorsqu'il est assemblé sur l'élément primaire 128.

Comme on peut l'apercevoir sur la figure 4, dans ce second mode de réalisation préféré, l'élément secondaire 134 est fabriqué et assemblé sur une surface externe 128b de l'élément primaire 128, ce dernier disposant d'une forme sensiblement parallélépipédique et étant destiné à constituer la partie de projection 23a de la portion radiale interne 20 de la partie pied 16, représentée sur la figure 2. Notons que la géométrie simplifiée de l'élément secondaire 134 par rapport à celle de l'élément secondaire 34 permet de faciliter encore davantage la réalisation de cet élément, de préférence toujours à l'aide de la technique de filage décrite ci-dessus.

Ensuite, lorsque l'élément primaire 128 et l'élément secondaire 134 ont été simultanément réalisés, de préférence dans un alliage de titane, il est ensuite procédé à leur assemblage de manière à obtenir sensiblement la géométrie de la pièce externe 14, comme l'illustre la figure 4. Par ailleurs, toujours à titre d'exemples indicatifs, l'opération d'assemblage de l'élément secondaire 134 sur l'élément primaire 128 est préférentiellement réalisée par soudage par friction linéaire, ou encore par soudage par « friction stir welding ».

Les deux pièces externes 14 réalisées comme indiqué ci-dessus sont ensuite classiquement assemblées par soudage par diffusion, afin d'obtenir la préforme 30 désirée.

La figure 5 représente une pièce externe 14 obtenue suite à la mise en oeuvre de l'étape de réalisation des deux pièces externes 14, lors de la mise en oeuvre du procédé de fabrication selon un troisième mode de réalisation préféré de la présente invention.

Dans ce troisième mode de réalisation préféré, seule cette étape de réalisation des deux pièces externes 14 diffère légèrement par rapport à celle mise en oeuvre dans le procédé de fabrication selon le second mode de réalisation préféré décrit précédemment, les autres étapes étant sensiblement identiques.

En effet, l'élément primaire 128 est réalisé de façon similaire à celle rencontrée dans le second mode de réalisation préféré, de sorte qu'il forme la partie pale 18 de la pièce 14, ainsi qu'une portion centrale de la partie pied 16 de cette même pièce externe 14.

De cette façon, comme on peut le voir sur la figure 5, l'élément primaire 128 s'étend donc également sur toute la longueur radiale de la pièce 14, tout en conservant une épaisseur homogène.

Néanmoins, contrairement au second mode de réalisation préféré du procédé selon l'invention dans lequel un unique élément secondaire 134 est prévu sur la surface externe 128b de l'élément primaire 128, le troisième mode de réalisation préféré prévoit que deux éléments secondaires 234 sont fabriqués et assemblés sur cette surface 128b, toujours de façon à obtenir une forme sensiblement identique à celle de la partie de projection 23a de la portion radiale interne 20 de la partie pied 16.

Ainsi, le découpage en deux éléments secondaires 234 de la partie de projection 23a permet de faciliter les opérations de soudage par friction linéaire de ces éléments 234 sur l'élément primaire 128, et donc de nécessiter un appareillage industriel moins performant que celui nécessaire à la mise en oeuvre du second mode de réalisation préféré du procédé selon la présente invention.

A ce titre, il est indiqué que la partie de projection 23a a été décrite comme pouvant être réalisée à l'aide de deux éléments secondaires 234, mais qu'elle pourrait bien entendu être réalisée avec un nombre supérieur d'éléments, sans sortir du cadre de l'invention.

Bien entendu, diverses modifications peuvent être apportées par l'homme du métier aux procédés de fabrication de l'aube creuse 1 qui viennent d'être décrits, uniquement à titre d'exemples non limitatifs.

## Revendications

1. Procédé de fabrication d'une aube creuse pour turbomachine comprenant un pied (2) et une pale (4), ledit procédé comportant une étape de réalisation de deux pièces externes (14) présentant chacune une partie pale (18) et une partie pied (16) et étant destinées à former au moins partiellement une préforme d'aube (30), le procédé comprenant en outre une étape d'assemblage par soudage par diffusion des deux pièces externes (14) de manière à obtenir ladite préforme d'aube (30), **caractérisé en ce que** l'étape de réalisation des deux pièces externes (14) comprend, pour chacune desdites pièces externes (14), les opérations suivantes :
- la fabrication par forgeage d'un élément primaire (28,128) constituant au moins ladite partie pale (18) de la pièce externe (14),
- la fabrication par forgeage d'au moins un élément secondaire (34,134,234) destiné à former au moins partiellement ladite partie pied (16) de la pièce externe (14), et
- l'assemblage de chaque élément secondaire (34,134,234) sur l'élément primaire (28,128) afin d'obtenir ladite pièce externe (14).

2. Procédé de fabrication selon la revendication 1, **caractérisé en ce que** l'opération d'assemblage de chaque élément secondaire (34,134,234) sur l'élément primaire (28,128) est mise en oeuvre à l'aide d'une technique prise parmi le groupe constitué du soudage par friction linéaire, et du soudage par « friction stir welding ».

3. Procédé de fabrication selon la revendication 1 ou la revendication 2, **caractérisé en ce que** l'étape d'assemblage par soudage par diffusion des deux pièces externes (14) de manière à obtenir ladite préforme d'aube (30) est suivie des étapes suivantes :
- mise au profil aérodynamique de ladite préforme (30), et
- gonflage par pression gazeuse et formage superplastique de ladite préforme (30) mise au profil aérodynamique.

4. Procédé de fabrication selon l'une quelconque des revendications précédentes, **caractérisé en ce que** chaque élément secondaire (34,134,234) destiné à former au moins partiellement ladite partie pied (16) de chacune des deux pièces externes (14) est réalisé par filage.

5. Procédé de fabrication selon l'une quelconque des revendications précédentes, **caractérisé en ce que** pour chacune des deux pièces externes (14), ledit procédé est mis en oeuvre de telle sorte que l'élément primaire (28) est fabriqué de manière à former uniquement ladite partie pale (18) de la pièce externe (14), et de telle sorte qu'un unique élément secondaire (34) est fabriqué de façon à former intégralement ladite partie pied (16) de cette préforme (14).

6. Procédé de fabrication selon l'une quelconque des revendications 1 à 4, **caractérisé en ce que** pour chacune des deux pièces externes (14), il est mis en oeuvre de telle sorte que l'élément primaire (128) est fabriqué de manière à former ladite partie pale (18) de la pièce externe (14) ainsi qu'une portion centrale de ladite partie pied (16) de cette pièce externe (14), et de telle sorte qu'au moins un élément secondaire (134,234) est fabriqué de façon à former une portion de ladite partie pied (16) de la pièce externe (14), lorsqu'il est assemblé sur l'élément primaire (128).

7. Procédé de fabrication selon la revendication 6, **caractérisé en ce que** pour chacune des deux pièces externes (14), l'élément primaire (128) est fabriqué de manière à présenter une surface externe (128b), et **en ce que** lesdits éléments secondaires (134,234) sont assemblés sur ladite surface externe (128b) de cet élément primaire (128).

## Claims

1. Method of manufacturing a hollow blade (1) for turbine engine comprising a foot (2) and a rotor blade (4), said method comprising a production stage of two external parts (14) each bearing a rotor blade part (18) and a foot part (16), and being intended to form at least partially a blade preform (30), the method further comprising an assembling stage via diffusion bonding of two external parts (14) so as to obtain said blade preform (30), **characterised in that** the production stage of the two external parts (14) comprises, for each of said external parts (14), the following operations:
- the making via forging of a primary element (28, 128) constituting at least said rotor blade part (18) of the external part (14);
- the making via forging of at least one secondary element (34, 134, 234) intended to form at least partially said foot part (16) of the external part (14); and
- the assembling of each secondary element (34, 134, 234) onto the primary element (28, 128) so as to obtain said external part (14).

2. Method of manufacturing set forth in claim 1, **characterised in that** the assembling operation of each secondary element (34, 134, 234) onto the primary element (28, 128) is implemented using a technique taken from among the group constituted of linear friction welding and of friction stir welding.

3. Method of manufacturing set forth in claim 1 or 2, **characterised in that** the assembling stage via diffusion bonding of the two external parts (14) so as to obtain said blade preform (30) is followed by the following stages:
- airfoil profiling of said preform (30); and
- bulging via gas pressure and superplastic forming of said airfoil profiling preform (30).

4. Method of manufacturing set forth in any one of the previous claims, **characterised in that** each secondary element (34, 134, 234) intended to form at least partially said foot part (16) of each of the two external parts (14) is made via extrusion.

5. Method of manufacturing set forth in any one of the previous claims, **characterised in that** for each of the two external parts (14), said method is implemented so that the primary element (28) is made in order to solely form said rotor blade part (18) of the external part (14), and so that a single secondary element (34) is made in order to wholly form said foot part (16) of this preform (14).

6. Method of manufacturing set forth in any one of claims 1 to 4, **characterised in that** for each of the two external parts (14), it is implemented so that the primary element (128) is made in order to form said rotor blade part (18) of the external part (14) as well as a central section of said foot part (16) of this external part (14), and so that at least one secondary element (134, 234) is made in order to form a section of said foot part (16) of the external part (14), when it is assembled onto the primary element (128).

7. Method of manufacturing set forth in claim 6, **characterised in that** for each of the two external parts (14), the primary element (128) is made so as to have an external surface (128b), and that said secondary elements (134, 234) are assembled onto said external surface (128b) of this primary element (128).

## Patentansprüche

1. Verfahren zur Herstellung einer hohlen Schaufel für Turbotriebwerke mit einem Schaufelfuß (2) und einem Schaufelblatt (4), wobei dieses Verfahren einen Schritt zur Herstellung von zwei äußeren Werkstücken (14) umfasst, die jeweils einen Schaufelblatt-Teil (18) und einen Schaufeifuß-Teil (16) aufweisen und dazu bestimmt sind, zumindest teilweise eine Schaufel-Vorform (30) zu bilden, wobei das Verfahren ferner einen Schritt des Zusammenfügens der beiden äußeren Werkstücke (14) durch Diffusionsschweißen dergestalt umfasst, dass die genannte Schaufel-Vorform (30) erzielt wird,
**dadurch gekennzeichnet,**
**dass** der Verfahrensschritt zur Herstellung der beiden äußeren Werkstücke (14) für jedes dieser äußeren Werkstücke (14) die folgenden Arbeitsvorgänge beinhaltet:
- die Fertigung durch Schmieden eines ersten Elements (28, 128), das mindestens den Schaufelblatt-Teil (18) des äußeren Werkstücks (14) bildet,
- die Fertigung durch Schmieden mindestens eines zweiten Elements (34, 134, 234), das dazu vorgesehen ist, zumindest teilweise den Schaufelfuß-Teil (16) des äußeren Werkstücks (14) zu bilden, und
- das Anbauen jedes zweiten Elements (34, 134, 234) an dem ersten Element (28, 128), um das genannte äußere Werkstück (14) zu erhalten.

2. Herstellungsverfahren nach Anspruch 1,
**dadurch gekennzeichnet,**
**dass** der Arbeitsvorgang des Anbauens jedes zweiten Elements (34, 134, 234) an dem ersten Element (28, 128) mittels einer Technik erfolgt, die unter die Verfahrensgruppe des Linear-Reibschweißens und des "Stir-Welding"-Reibschweißens fällt.

3. Herstellungsverfahren nach Anspruch 1 oder 2,
**dadurch gekennzeichnet,**
**dass** auf den Verfahrensschritt des Zusammenfügens der beiden äußeren Werkstücke (14) durch Diffusionsschweißen zur Herstellung der Schaufel-Vorform (30) die folgenden Verfahrensschritte folgen:
- Herstellen des aerodynamischen Profils an dieser Vorform (30), und
- Aufblähen durch Gasdruck und superplastisches Formen dieser mit dem aerodynamischen Profil versehenen Vorform (30).

4. Herstellungsverfallren nach einem der vorherigen Ansprüche,
**dadurch gekennzeichnet,**
**dass** jedes zweite Element (34, 134, 234), das dazu vorgesehen ist, zumindest teilweise den Schaufelfuß-Teil (16) jedes der beiden äußeren Werkstücke (14) zu bilden, durch Strangpressen hergestellt wird.

5. Herstellungsverfahren nach einem der vorherigen Ansprüche,
**dadurch gekennzeichnet,**
**dass** dieses Verfahren für jedes der beiden äußeren Werkstücke (14) dergestalt ausgeführt wird, dass das erste Element (28) so gefertigt wird, dass nur der genannte Schaufelblatt-Teil (18) des äußeren Werkstücks (14) gebildet wird, und dergestalt, dass ein einziges zweites Element (34) so gefertigt wird, dass der Schaufelfuß-Teil (16) dieser Vorform (14) als integraler Bestandteil gebildet wird.

6. Herstellungsverfahren nach einem der Ansprüche 1 bis 4,
**dadurch gekennzeichnet,**
**dass** es für jedes der beiden äußeren Werkstücke (14) dergestalt ausgeführt wird, dass das erste Element (28) so gefertigt wird, dass es das Schaufelblatt-Teil (18) des äußeren Werkstücks (14) sowie einen zentralen Teil des Schaufelfuß-Teils (16) dieses äußeren Werkstücks (14) bildet, und so, dass mindestens ein zweites Element (134, 234) so gefertigt wird, dass es einen Abschnitt des Schaufelfuß-Teils (16) des äußeren Werkstücks (14) bildet, wenn es an dem ersten Element (128) angefügt wird.

7. Herstellungsverfahren nach Anspruch 6,
**dadurch gekennzeichnet,**
**dass** für jedes der beiden äußeren Werkstücke (14) das erste Element (128) dergestalt gefertigt wird, dass es eine Außenfläche (128b) aufweist, und dass die zweiten Elemente (134, 234) an dieser Außenfläche (128b) dieses ersten Elements (128) angebaut werden.
